# EUROPÄISCHE PATENTSCHRIFT

(11) **EP 1 531 275 B1**
(45) Veröffentlichungstag und Bekanntmachung des Hinweises auf die Patenterteilung: **15.08.2007**
(21) Anmeldenummer: 04006155.8
(22) Anmeldetag: 16.03.2004
(51) Int. Cl.: F16B 5/01, E04B 1/04

(54) **Vorrichtung und Verfahren zur mechanischen Verbindung von zwei Bauteilen**
Device and method for connecting two elements
Dispositif et procédé de connexion de deux éléments.

(30) Priorität: 14.11.2003 DE 10353376
(43) Veröffentlichungstag der Anmeldung: 18.05.2005
(73) Patentinhaber: Airbus Deutschland GmbH, 21129 Hamburg (DE)
(72) Erfinder: Steinbeck, Herbert, Dipl.-Ing., 21149 Hamburg (DE)
(74) Vertreter: Hansmann, Dierk

(56) Entgegenhaltungen:
- AT-B- 409 789
- DE-A1- 3 333 092

## Beschreibung

Die Erfindung betrifft eine Vorrichtung und ein Verfahren zur mechanischen Verbindung von zwei Bauteilen, die Maßabweichungen in drei Ebenen ausgleicht und gleichfalls eine formschlüssige und spielfreie Arretierung umsetzen.

Es sind formschlüssige und spielfreie mechanische Verbindungen bekannt, die auch Maßabweichungen ausgleichen, welche aber auf zwei Ebenen beschränkt sind. Diese Maßabweichungen können auf konstruktiven Toleranzen beruhen und / oder aus anlagenbedingten Toleranzen der Fertigungsmittel zur Herstellung der zu verbindenden Einzelteile resultieren. Ebenso sind Maßabweichungen aufgrund eines nachträglichen, materialbedingten Verzugs denkbar. Für den Ausgleich einer Maßabweichung in der dritten Ebene ist bei derartigen Schraubverbindungen der Einsatz einer zusätzlichen mechanischen Verbindung oder eines zusätzlichen Verbindungselementes erforderlich. Lösungen für Verbindungen mechanischer Art werden bekanntermaßen mit mehreren Teilelementen umgesetzt. Daher wird ein erhöhter Raumbedarf (mehr Einbauraum) für die Verbindung an sich als auch für die Montage der Verbindung benötigt. Ferner sind derartige Verbindungsarten aufgrund der zusätzlichen Elemente kostenintensiver und erfordern einen höheren Zeitaufwand bei der Montage. Wegen der zusätzlichen Einzelteile weisen diese Verbindungen auch ein höheres Gesamtgewicht auf

Ferner sind auch mechanische Verbindungen bekannt, die Maßabweichungen in drei Ebenen ausgleichen können (siehe beispielsweise DE 33 33 092 A).

Demzufolge liegt der Erfindung die Aufgabe zugrunde, eine Vorrichtung und eine Verfahren zur mechanischen Verbindung von zwei Bauteilen vorzuschlagen, mit der die Position der zu verbindenden Bauteile, deren Verbindungsbereiche zueinander abweichen, dermaßen verändert wird, dass ein Ausgleich der Abweichung der Verbindungsbereiche der Bauteile in drei Ebenen innerhalb einem vordefinierten Einstellbereich umgesetzt wird. Damit soll eine Situation geschaffen werden, während der die beiden Bauteile formschlüssig verbunden werden, wobei die Stabilität dieser Anordnung von dermaßen verbundenen Bauteilen auch unter externer Einwirkung von vordefinierten Lasten auf diese Bauteile unter allen Umgebungsbedingungen, beispielsweise unter der Einwirkung von Vibrationen, Temperaturschwankungen, Feuthligkeitgeinflüssen, etc. unbegrenzt sichergestellt wird.

Diese Aufgabe wird durch die in den Ansprüchen 1 und 14 angegebenen Maßnahmen gelöst. In den weiteren Ansprüchen sind zweckmäßige Ausgestaltungen dieser Maßnahmen angegeben.

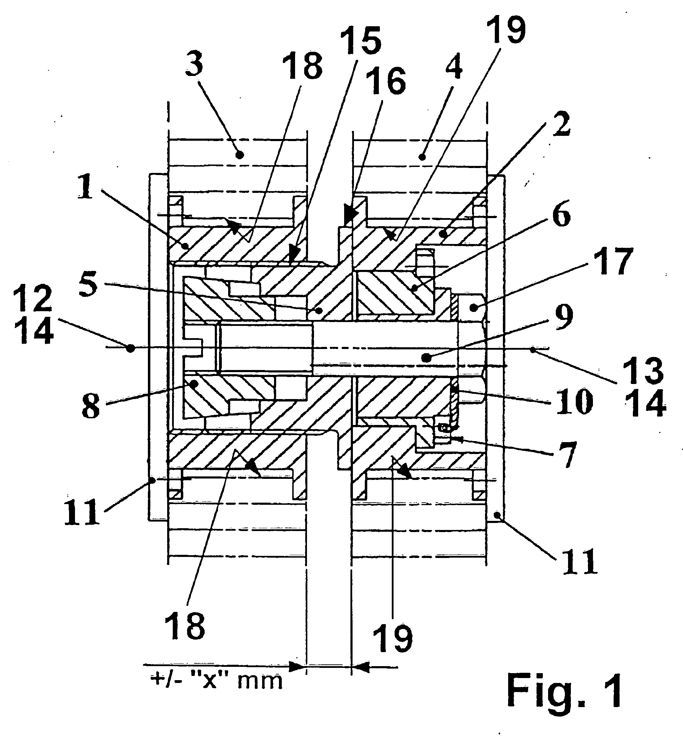

Die Erfindung ist in einem Ausführungsbeispiel anhand der beigefügten Zeichnung näher beschrieben. Dazu-zeigt die
- Fig. 1: den Aufbau der Vorrichtung zur mechanischen Verbindung von zwei Bauteilen.

Dieser Aufbau umfasst - neben dem mechanisch zu verbindenden ersten Bauteil 3 mit dem zweiten Bauteil 4 - folgende Zusatzelemente, von denen eine Gewindehülse 1, eine Spannhülse 2, ein Gewindefuß 5, ein Außen-Excenter 6, ein Innen-Excenter 7, ein Spannkonus 8, ein Gewindebolzen 9, eine Sicherungsscheibe 10 und eine Abdeckkappe 11 angegeben werden.

Die Vorrichtung zur mechanischen Verbindung von zwei Bauteilen 3, 4 lässt sich folgendermaßen angeben. Die beiden Bauteile 3, 4, die nebeneinander angeordnet sind und mechanisch verbunden werden sollen, weisen jeweils ein durchgängiges kreisrundes Loch (eine Durchgangsbohrung) auf. Diese beiden Bauteile 3, 4 werden dermaßen nebeneinander angeordnet, dass die Lochachsen 12, 13 der (vorhandenen) Löcher eine übereinstimmende Lage einnehmen. An dieser Stelle wird erwähnt, dass auf eine Bezifferung jener Löcher, mit denen die Bauteile 3, 4 ausgestattet sind, in der Fig. 1 verzichtet wird, weil eine bezifferte Darstellung dieser Löcher wegen der weiteren Positionierung von Zusatzelementen in diesen Löchern eine undeutliche Auskunft vermitteln wird. Deshalb wird der Betrachter sich an den Lochachsen-Angaben orientieren, wobei eine mit entsprechenden Pfeilangaben hervorgehobene erste Lochwand 18 eines ersten Loches und zweite Lochwand 19 eines zweiten Loches die Lage und den Durchmesser des betreffenden Loches bildlich wiedergibt.

Die Vorrichtung verwendet also mehrere Zusatzelemente, mit denen die Befestigung der beiden Bauteile 3, 4 in drei Ebenen (drei Achsenrichtungen) und deren formschlüssige Verbindung umgesetzt wird. Deshalb ist das zweite Bauteil 4 mit einem Gewindefuß 5 ausgerüstet, der sich aus der Integration eines Gewindefußträgers 15 und einer (einseitig endseitig) letzterem flanschartig angesetzten Gewindefußplatte 16 zusammensetzt, dessen lochaxial der Lochachsen 12, 13 gelegener Gewindefußträger 15 mit einer lochaxial einer ersten Lochachse 12 des (dem ersten Bauteil 3 gebohrten) ersten Loches gelegenen Gewindehülse 1, die Bestandteil des ersten Bauteiles 3 ist, (ein)schraubbar ist. Der Gewindefußträger 15 ist als hohlzylindrischer Körper ausgebildet. Die Gewindefußplatte 16 ist mit einer Mittelbohrung ausgestattet, wobei der Bohrdurchmesser dieser Mittelbohrung (in Normalfall) kleiner oder (denkbar maximal) gleich dem Innendurchmesser des hohlzylindrisch ausgebildeten Gewindeträgers 15 ist. Unter der Voraussetzung, dass die Bohrachse der Mittelbohrung der Gewindefußplatte 16 und die Hohlzylinderachse des Gewindefußträgers 15 eine übereinstimmende Achsenlage einnehmen und die Flächenrückseite der Wandung des nebengelegenen Gewindefußträgers 15 anliegt, wird die flanschartige Verbindung der Gewindefußplatte 16 mit dem Gewindeträger 15 machbar. Da auf der Außenwand des Gewindefußträgers 15 ein Außengewinde und auf einem Innenwandbereich der Gewindehülse 1 ein Innengewinde aufgebracht ist, lässt sich der Gewindefußträger 15 durch eine Drehbewegung um die erste Lochachse 12 der Gewindehülse 1 einschrauben.

Durch die Schraubbewegung des Gewindefußes 5 wird eine Einstellung der beiden Bauteile 3, 4 zueinander in der ersten Ebene umgesetzt.

Innerhalb der lochaxial einer zweiten Lochachse 13 [eines zweiten Loches, das dem zweiten Bauteil 14 ausgenommen ist,] gelegenen Spannhülse 2, die ebenfalls mit Bestandteil des zweiten Bauteiles 4 ist, wird ein Außen-Excenter 6, der als hohlzylindrischer Körper ausgebildet ist, und innerhalb diesem lochaxial der zweiten Lochachse 13 ein Innen-Excenter 7, der ebenfalls als hohlzylindrischer Körper ausgebildet ist, angeordnet. Durch entsprechende Drehungen der beiden Excenter 6, 7 um die zweite Lochachse 13, deren Drehrichtung vom Ausgleich der Maßabweichung der Verbindungsbereiche der Bauteile 3, 4 abhängt, werden die Einstellungen der beiden Bauteile 3, 4 in den Querrichtungen für die zweite und dritte Ebene umgesetzt.

Außerdem wird ein Gewindebolzen 9 durch den verbleibenden (von erwähnten Zusatzelementen) eingeschlossenen Lochraum, welchen die Gewindehülse 1, der Gewindefuß 5 samt Gewindefußträger 15, der Außen-Excenter 6 und der Innen-Excenter 7 einschließen, geführt. Auf dessen Bolzenendbereich, der unterhalb der Gewindehülse 1 gelegen ist, ist der Spankonus 8 geschraubt. Dem anderen Ende des Gewindebolzens 9 ist ein Bolzenkopf 17 angeformt, welcher dem Querschnitt des Innen-Excenter 7 (außen)stirnseitig anliegt. Nach den (vorher erwähnten) geschehenen Einstellungen der beiden Bauteile 3, 4 wird durch eine Drehbewegung des Bolzenkopfes 17 um die zweite Lochachse 13 der Spannkonus 8 dem erstgenannten (innerhalb der Hülsenwand der Gewindehülse 1 positionierten) Bolzenendbereich aufgeschraubt. Gleichfalls wird auf den Gewindebolzen 9 mit einem vordefinierten Drehmoment eine bolzenaxial wirkende Zugkraft übertragen, wodurch der Spannkonus 8 gegen den Gewindefußträger 15 drückt. Infolge dessen werden die Bauteile 3, 4 durch alle eingesetzten Zusatzelemente mechanisch verbunden.

Ausführlicher betrachtet lässt sich diese Vorrichtung zur mechanischen Verbindung von zwei Bauteilen 3, 4 derart angeben, wonach innerhalb dem ersten Loch des ersten Bauteils 3 an einer (letzterem zugeordneten) ersten Lochwand 18 eine Gewindehülse 1 eingepasst ist. Der innere Bereich der Hülsenwand jener Gewindehülse 1 ist mit einem Innengewinde versehen. Anderenfalls ist innerhalb dem zweiten Loch des zweiten Bauteils 4 an einer (letzterem zugeordneten) zweiten Lochwand 19 eine Spannhülse 2 eingepasst. An dem Bereich der (sogenannten vorderseitigen) Spannhülsenwand, die sich hülsenstirnseitig dem (nebengelegenen) ersten Bauteil 3 zuwendet, ist der Gewindefuß 5 angeordnet. Dabei ist die Stirnfläche der Gewindefußplatte 16, die (wie vorbeschrieben) dem Gewindefußträger 15 flanschartig angeformt ist, (mit einem Blick auf die Fig. 1), stirnseitig an jener (sogenannten vorderseitigen) Spannhülsenwand befestigt. Weiterhin ist der Gewindefußträger 15 des Gewindefußes 5 in einer Endposition der innenliegenden Hülsenwand der Gewindehülse 1 eingeschraubt. Das ist möglich, weil auf der zylindrische Außenwandbereich des Gewindefußträgers 15 mit einem Außengewinde versehen ist, das sich mit dem Innengewinde der Gewindehülse 1, das auf dem innenliegenden Hülsenwandbereich liegt, verschrauben lässt. Durch das Einschrauben des Gewindefußträgers 15 in die Gewindehülse 1 wird eine Einstellung der zueinander positionierten beiden Bauteile 3, 4 in einer ersten Ebene erreicht.

Weiter ist innerhalb dem innenliegenden Hülsenwandbereich der Spannhülse 2 der Außen-Excenter 6 angeordnet, der als hohlzylindrischer Körper ausgebildet ist. Der zylinderförmige Außenwandbereich des Außen-Excenters 6 liegt dem innenliegenden Hülsenwandbereich der Spannhülse an. An dem Bereich der (sogenannten vorderseitigen) Außen-Excenter-Wand, die sich excenterstirnseitig dem (nebengelegenen) ersten Bauteil 3 zuwendet, ist ein Flansch angesetzt, an den die erwähnte Gewindefußplatte 16 (wenigstens teilweise) fixiert ist. An dem Bereich der (sogenannten rückseitigen) Außen-Excenter-Wand, die sich dem ersten Bauteil 3 abwendet, ist ein weiterer Flansch angesetzt, dessen rückseitige Flansch-Stirnfläche anliegend einer dem innenseitigen Hülsenwandbereich der Spannhülse 2 ausgenommenen treppenartigen Ausnehmung angeordnet ist. Außerdem ist innerhalb dem innenliegenden Außen-Excenter-Bereich des zylinderförmigen Außen-Excenters 6 ein innen-Excenter 7 angeordnet ist, der ebenso als zylinderförmiger Körper ausgebildet ist. Der Außenwandbereich des Innen-Excenters 7 ist an dem innenliegenden Außen-Excenter-Bereich gelegen, wobei dessen (sogenannte vorderseitige) Innen-Excenter-Wand, die sich dem ersten Bauteil 3 zuwendet, nahe der Stirnseite der Gewindefußplatte 16 angeordnet ist. An der (eine sogenannte rückseitige Lage einnehmenden) Stirnseite der Innen-Excenter-Wand, die sich dem ersten Bauteil 3 abwendet, ist ein weiterer Flansch angesetzt, der stirnrückseitig der (erwähnten) treppenartig gestalteten Aussparung des innenseitigen Hülsenwandbereichs der Spannhülse 2 anliegend ist. Durch entsprechende (vorher erwähnte) Drehungen des Außen- und / oder des Innen-Excenters 6, 7 werden die Einstellungen des ersten und / oder des zweiten Bauteils 3, 4 in den Querrichtungen für die zweite und / oder dritte Ebene durchgeführt.

Hinzukommend ist, wie bereits erwähnt, innerhalb dem [von der Gewindehülse 1 und dem (letzterer eingeschraubten) Gewindefußträger 15 samt der (letzterem flanschartig angeflanschten) Gewindefußplatte 16 und von dem (innerhalb des Innenwandbereiches des Außen-Excenters 6 positionierten) Innen-Excenter 7] eingeschlossenen (verbleibenden) Lochraum der lochaxial gelegene Gewindebolzen 9 angeordnet, dem am vorher genannten) ersten Ende des Gewindebolzens 9 ein Bolzenkopf 17 angeformt ist. Dem Bolzenkopf 17 ist eine Sicherungsscheibe 10 unterlegt, die der (sogenannten rückseitigen) Flansch-Stirnfläche des Innen-Excenters 7 anliegend ist.

Zudem ist der Spannkonus 8 als ein kegelstumpfförmer Hohlkörper ausgebildet. Letzterem ist auf der innenliegenden Wand eine zur Kegelstumpf-Deckfläche gerichtete durchgängige Mittelbohrung aufgebracht, wobei die Kegelstumpf-Deckfläche dem zweiten Bauteil 4 zugewandt ist. Der Spannkonus 8 ist innerhalb der Hülsenwand der Gewindehülse 1 angeordnet, wobei der Wand dieser Mittelbohrung ein Innengewinde aufgebracht ist, welches sich mit dem verbleibenden zweiten Ende des Gewindebolzens 9, das mit einem Außengewinde ausgestattet ist, schrauben lässt. Die Außenwand des Spannkonus 8 ist im bolzengeschraubten Zustand mit einem vordefinierten Anzugsmoment gegen den fußvorderseitig gelegenen Innenwand-Trägerbereich des Gewindefußträgers arretiert.

Dem wird ergänzt, dass der Gewindefuß 5 mit mehreren Spreizfingern ausgestattet ist, welche durch eine radial ausgeübte Spreizwirkung des Spannkonus 8, die während der mechanischen Druckausübung durch die Einschraubung des Gewindebolzens in den Spannkonus 8 auf und gegen den Gewindefußträger 15 ausgeübt wird, in das auf der innenliegenden Hülsenwand der Gewindehülse 1 liegende Gewinde gedrückt werden. Es soll nicht unerwähnt bleiben, dass es vorgesehen ist, dass der freiliegende Lochraum eingangs der mechanisch verbundenen Bauteile 3, 4 zu deren beiden Seiten mit einer Abdeckdeckkappe 11 verschlossen wird.

Demnach wird also eine Vorrichtung beschrieben, bei der die Gewindehülse 1 mit Bestandteil des ersten zu befestigenden Bauteils 3 ist, die den Gewindefuß 5 (den Gewindefußträger 15) des zweiten Bauteils 4 aufnimmt. Dieser Gewindefuß 5 verfügt über Spreizfinger und wird in die Gewindehülse 1 eingeschraubt. Durch Drehung des Gewindefußes 5 wird die Einstellung der beiden Bauteile 3, 4 in der ersten Ebene zueinander durchgeführt. Die Spannhülse 2 des zu verbindenden zweiten Bauteils 4 nimmt den Außen-Excenter 6 und den innen-Excenter 7 auf. Durch entsprechende Drehungen der beiden Excenter 6, 7 werden die Einstellungen der beiden Bauteile 3, 4 in den Querrichtungen für die zweite und dritte Ebene durchgeführt.

Nach der dreiachsigen Einstellung wird - zur Arretierung mittels des Gewindebolzens 9 mit der Sicherungsscheibe 10 - der Spannkonus 8 mit einem vorgegebenen Drehmoment angezogen. Durch die radiale Spreizwirkung des Spannkonus 8 werden die Spreizfinger des Gewindefußes 5 in das (der innenliegenden Hülsenwand aufgebrachte) Innengewinde der Gewindehülse 1 gedrückt, wobei eine formschlüssige und spielfreie Verbindung hergestellt wird. Zur beidseitigen Abdeckung der Verbindung kann je eine Abdeckkappe 11 vorgesehen werden.

Die Schraubverbindung kann je nach Anforderung und unter Berücksichtigung der sich in Summe ergebenden auszugleichenden Toleranzen konstruktiv ausgelegt werden. Für die Einstellung und die Arretierung dieser Schraubverbindung kann handelsübliches Werkzeug verwendet werden.

Um die mechanische Verbindung von zwei Bauteilen 3, 4 verfahrensmäßig umzusetzen, werden außerdem folgende technologischen Abläufe angegeben. Das angegebene Verfahren setzt den (vorher öfters erwähnten) Einsatz von Bauteilen 3, 4 voraus, denen jeweils (zu einem früheren Zeitpunkt) ein kreisrund gebohrtes Loch (allgemein: ein Durchgangsloch) gebohrt ist. Diese Bauteile 3, 4 werden lochaxial nebeneinander liegend angeordnet, wobei darauf geachtet wird, dass dabei eine übereinstimmende Lage der Lochachsen 12, 13 von beiden Bauteilen 3, 4 eingehalten wird. Es wird bezweckt, dass eine Befestigung der beiden Bauteile 3, 4 in allen drei Ebenen (in drei Achsenrichtungen) erreicht wird und gleichermaßen eine formschlüssige Verbindung dieser Bauteile 3, 4 gewährleistet wird.

Um dieses Vorhaben erfolgversprechend zu verwirklichen, wird man nachfolgende Schritte (in der angegebenen Reihenfolge) umsetzen. Zunächst wird der Träger eines Gewindefußes 5 von einem zweiten Bauteil 4 mit einer Gewindehülse 1 von einem ersten Bauteil 3 lochaxial geschraubt.

Dabei wird durch die um eine erste Lochachse 12 ausgeführte Schraubbewegung des Gewindefußes 5 (des Gewindefußträgers 15) eine Einstellung der beiden Bauteile 3, 4 zueinander in der ersten Ebene umgesetzt. Weiter wird innerhalb einer Spannhülse 2 von einem zweiten Bauteil 4 ein Außen-Excenter 6 und innerhalb diesem ein Innen-Excenter 7 hohlkörperaxial angeordnet. Darauffolgend werden die beiden Excenter 6, 7 in entsprechender Drehrichtung um eine zweite Lochachse 13 bewegt, wodurch die Einstellungen der beiden Bauteile 3, 4 in den Querrichtungen für die zweite und dritte Ebene umgesetzt werden.

Anschließend wird ein Gewindebolzen 9 lochaxial durch den (von genannten Zusatzelementen eingeengten) verbleibenden Lochraum geführt, welchen (in der Hauptsache) die Gewindehülse 1 der Gewindefuß 5 samt Gewindefußträger 15 und der Innen-Excenter 7 einschließen. Darauffolgend wird ein (ohne Bolzenkopf 17 versehenes) Ende des Gewindebolzens 9, der unterhalb (innerhalb der Hülsenwand) der Gewindehülse 1 gelegen ist, einem Spankonus 8 eingeschraubt.

Weiter wird das anderen Ende des Gewindebolzens 9, dem ein Bolzenkopf 17 angeformt ist, stirnseitig am Innen-Excenter 7 angelegt. Danach wird durch die Drehbewegung des Bolzenkopfes 17 der Spannkonus 8 dem (bolzenkopflosen) Bolzenendbereich aufgeschraubt, wobei der Gewindebolzen 9 gleichermaßen mit einem vordefinierten Drehmoment beansprucht wird, wodurch auf den Gewindebolzen 9 eine bolzenaxial wirkende Zugkraft übertragen wird. Dadurch wird der Spannkonus 8 gegen den Gewindefußträger 15 gedrückt. Infolge dessen wird man erreichen, dass die Bauteile 3, 4 durch (das Zusammenwirken) aller eingesetzten Zusatzelemente mechanisch verbunden werden.

Sinnvollerweise wird man zur Einstellung der zu positionierenden Bauteile 3, 4 in der ersten Ebene (ersten Achsenrichtung) einen mit Spreizfingern ausgestatteten Gewindefuß 5 (genauer: Gewindefußträger15) verwenden. Dabei wird man erreichen, dass diese Spreizfinger durch eine auftretende radiale Spreizwirkung des Spannkonus 8 [mit zunehmender Einschraubung des Gewindefußes 5 (des Gewindefußträgers 15) in die Gewindehülse 1] in das Gewinde der Gewindehülse 1 gedrückt werden, wodurch eine formschlüssig und spielfreie (mechanische) Verbindung der Bauteile 3, 4 erzielt wird. Durch die Einschraubung (Drehung) des Gewindefußes 5 wird die Einstellung der beiden Bauteile 3, 4 in der ersten Ebene (ersten Achsenrichtung) zueinander durchgeführt.

Weil die Spannhülse 2 einerseits Bestandteil des zweiten Bauteiles 4 ist und andererseits den Außen-Excenter 6 und den Innen-Excenter 7 aufnimmt, wird man durch entsprechende Drehungen des einzelnen Excenters 6, 7 die Einstellung der beiden Bauteile 3, 4 in der zweiten und dritten Ebene (in der zweiten und dritten Achsenrichtung) - also in den Querrichtungen - umsetzen.

Nach den geschehenen Einstellungen wird man den Gewindebolzen 9 (inclusive die Sicherungsscheibe 10) mit einem vordefinierten Drehmoment anziehen, und damit erreichen, dass das bolzenaxial übertragene Drehmoment auf den Spannkonus 8 (durch sein Einschrauben auf den Gewindebolzen 9 unterhalb der Gewindehülse 1 mit Schraubrichtung unterhalb des Gewindefußträgers 15) übertragen wird. Demnach wird eine Arretierung der eingestellten Bauteilpositionen der Bauteile 3, 4 über die bolzenaxial übertragende Zugkraft (also über den Gewindebolzen 9) umgesetzt, wobei eben durch den axial wirkenden Spannkonus 8 eine formschlüssig und spielfreie (mechanische) Verbindung der Bauteile (3, 4) erzielt wird.

### Bezugszeichen

- 1: Gewindehülse
- 2: Spannhülse
- 3: erstes Bauteil
- 4: zweites Bauteil
- 5: Gewindefuß
- 6: Außen-Excenter
- 7: Innen-Excenter
- 8: Spannkonus
- 9: Gewindebolzen
- 10: Sicherungsscheibe
- 11: Abdeckkappe
- 12: erste Lochachse
- 13: zweite Lochachse
- 14: Bolzenachse
- 15: Gewindefußträger
- 16: Gewindefußplatte
- 17: Bolzenkopf
- 18: erste Lochwand
- 19: zweite Lochwand

## Patentansprüche

1. Vorrichtung zur mechanischen Verbindung von zwei Bauteilen, denen jeweils durchgängig ein kreisrund gebohrtes Loch ausgenommen ist und die dermaßen nebeneinander angeordnet sind, dass die Lage einer ersten Lochachse (12) eines ersten Loches, das einem ersten Bauteil (3) ausgenommen ist, und die Lage einer zweiten Lochachse (13) eines zweiten Loches, das einem zweiten Bauteil (4) ausgenommen ist, übereinstimmend ist, bei der mehrere Zusatzelemente eingesetzt sind, mit denen die Befestigung der beiden Bauteile (3, 4) in drei Ebenen und deren formschlüssige Verbindung umgesetzt wird, mit den folgenden Merkmalen, nach denen eine Gewindehülse (1) ein Bestandteil eines ersten Bauteils (3) und eine Spannhülse (2) ein Bestandteil eines zweiten Bauteils (4) ist, wobei diese beiden Hülsen (1, 2) lochaxial angeordnet sind, und das zweite Bauteil (4) mit einem Gewindefuß (5), dem ein als hohlzylindrischer Körper ausgebildeter Gewindefußträger (15) und eine letzterem flanschartig angeformte Gewindefußplatte (16) integriert ist, ausgerüstet ist, wobei der Gewindefußträger (15) der Gewindefußplatte (16) im rechten Winkel verbunden ist, die quer zu den Lochachsen (13, 14) an der Spannhülse (2) fixiert ist, und auf einem Innenwandbereich der Gewindehülse (1) und einem Außenwandbereich des Gewindefußträgers (15) jeweils ein Gewinde aufbracht ist, weswegen sich ein auf der Außenwand des Gewindeträgers (15) aufgebrachtes Außengewinde durch eine lochaxiale Drehung des Gewindefußträgers (15) um die erste Lochachse (12) einem auf der inneren Hülsenwand der Gewindehülse (1) aufgebrachtem Innengewinde einschrauben lässt, wodurch eine Einstellung der beiden Bauteile (3, 4) in einer ersten Ebene umgesetzt wird, und innerhalb der Spannhülse (2) ein Außen-Excenter (6) und ein Innen-Excenter (7) angeordnet ist, die beide lochaxial der zweiten Lochachse (13) gelagert sind, wobei der Innen-Excenter (7) innerhalb dem Außen-Excenter (6) angeordnet ist, weswegen sich durch eine lochaxiale Drehung der beiden Excenter (6, 7) um die zweite Lochachse (14) die Einstellungen der beiden Bauteile (3, 4) in den Querrichtungen für die zweite und dritte Ebene umsetzen lassen, und ein Gewindebolzen (9) lochaxial der ersten und zweiten Lochachse (12, 13) durch den verbleibenden Lochraum des ersten und zweiten Loches, welcher durch die Anordnung der Gewindehülse (1), des Gewindefußes (5) und einschließlich des Gewindefußträgers sowie des Innen-Excenters (7) begrenzt ist, geführt ist, dessen Bolzengewinde, das einem Bolzenendbereich, der innerhalb der Gewindehülse (1) gelegen ist, am Bolzenumfang aufgebracht ist, sich durch entsprechende Bolzendrehungen um die erste Lochachse (12) einem Innengewinde eines lochaxial der ersten Lochachse (12) gelegenen und als ein kegelstumpfförmer Hohlkörper ausgebildeten Spannkonus (8), das letzterem auf der innenliegenden Wand einer zur Kegelstumpf-Deckfläche gerichteten durchgängigen Mittelbohrung aufgebracht ist, schrauben lässt, wobei am anderen Ende des Gewindebolzens (9) ein Bolzenkopf angeformt ist, welcher lochachsenquerseitig dem Iririen-Excenier (7) stirnseitig anliegend ist, und außerdem nach den geschehenen Einstellungen der beiden Bauteile (3, 4) durch eine lochaxiale Drehbewegung des Bolzenkopfes um die zweite Lochachse (13) der Spännkonus (8) dem Botzenendbereich aufgeschraubt wird und gleichfalls auf den Gewindebolzen (9) mit einem vordefinierten Drehmoment eine bolzenaxial wirkende Zugkraft übertragen wird, wodurch der Spannkonus (8) gegen den Gewindefußträger (15) drücken wird, infolge dessen die Bauteile (3, 4) durch alle eingesetzten Zusatzelemente mechanisch verbunden sind.

2. Vorrichtung nach Anspruch 1, **dadurch gekennzeichnet, dass** dem Gewindefußträger (15), dessen Zylinderachse identisch der Lochachse angeordnet ist, endseitig die Gewindefußplatte (16) flanschartig angesetzt ist, die mit einer Mittelbohrung ausgestattet ist und deren Flansch-Stimfläche sich dem zweiten Bauteil (4) zuwendet.

3. Vorrichtung nach Anspruch 2, **dadurch gekennzeichnet, dass** der Bohrdurchmesser der Mittelbohrung kleiner oder gleich dem Innendurchmesser des Gewindefußträgers (15) ist, wobei der Durchmesser der Mittelbohrung gleich größer als der Bolzendurchmesser des Gewindebolzens (9) ist.

4. Vorrichtung nach Anspruch 1, **dadurch gekennzeichnet, dass** wenigstens ein Teilbereich der Stirnfläche der Gewindefußplatte (16) an der Spannhülse (2) fixiert ist.

5. Vorrichtung nach Anspruch 1, **dadurch gekennzeichnet, dass** der Außen-Excenter (6) als ein lochaxial gelegener weiterer hohlzylindrischer Körper ausgebildet ist, dessen Zylinderachse identisch der Lochachse angeordnet ist, dem endseitig ein Flansch mit einer weiteren Mittelbohrung, dessen Flansch-Stirnfläche sich dem ersten Bauteil (3) abwendet, angesetzt ist, deren Bohrdurchmesser identisch dem Innendurchmesser des hohlzylindrischen Körpers ist, wobei der Durchmesser der Mittelbohrung mit dem Innendurchmesser des hohlzylindrischen Körpers übereinstimmend ist, dessen rückseitige Flansch-Stirnfläche anliegend einer dem innenumfänglichen Wandbereich der Spannhülse (2) ausgesparten treppenartigen Ausnehmung angeordnet ist.

6. Vorrichtung nach den Ansprüchen 1 und 5, **dadurch gekennzeichnet, dass** der Innen-Excenter (7) als ein lochaxial gelegener zusätzlicher hohlzylindrischer Körper ausgebildet ist, dessen Zylinderachse identisch der Lochachse angeordnet ist, dem endseitig ein weiterer Flansch mit einer zusätzlichen Mittelbohrung, dessen Flansch-Stirnfläche sich dem ersten Bauteil (3) abwendet, angesetzt ist, wobei der Durchmesser der weiteren Mittelbohrung mit dem Innendurchmesser des weiteren hohlzylindrischen Körpers übereinstimmend ist, dessen rückseitige Flansch-Stirnfläche anliegend der Flansch-Stirnfläche des Außen-Excenters (6) angeordnet ist.

7. Vorrichtung nach den Ansprüchen 1 und 6, **dadurch gekennzeichnet, dass** dem Gewindebolzen (9) eine Sicherungsscheibe unterlegt ist, die zwischen dem Bolzenkopf und der Flansch-Stirnfläche des Innen-Excenters (7) angeordnet ist.

8. Vorrichtung nach Anspruch 1, **dadurch gekennzeichnet, dass** der kegelstumpfförmiger Hohlkörper des Spannkonus (8) mit einer außenumfänglich zum Gewindefußträger (15) verlaufenden Verjüngung der Körperwand ausgebildet ist

9. Vorrichtung nach den Ansprüchen 1 und 8, **dadurch gekennzeichnet, dass** die Bohrachse der Mittelbohrung desJiegelstumpfförmigen Hohlkörpers des Spannkonus (8) identisch der ersten Lochachse (12) angeordnet ist und der außenumfänglich verjüngte Körperwandbereich des Spankonus (8) bereichsweise, vorzugsweise überwiegend bis teilweise, innerhalb der Gewindehülse (1) geführt ist.

10. Vorrichtung nach den Ansprüchen 1 und 9, **dadurch gekennzeichnet, dass** die innenliegende Wand der Mittelbohrung des Spannkonus (8) mit einem Innengewinde ausgestattet ist, welches sich mit dem verbleibenden (kopflosen) zweiten Ende des Gewindebolzens (9), das mit einem Außengewinde ausgestattet ist, schrauben lässt, wobei die Außenwand des Spannkonus (8) im bolzengeschraubten Zustand mit einem vordefinierten Anzugsmoment gegen den fußvorderseitig gelegenen Innenwand-Trägerbereich des Gewindefußträgers (15) arretiert ist.

11. Vorrichtung nach Anspruch 1, **dadurch gekennzeichnet, dass** der Gewindefuß (5) mit mehreren Spreizfingern ausgestattet ist, welche durch eine radial ausgeübte Spreizwirkung des Spannkonus (8), die während des Drückens gegen den Gewindefußträger (15) ausgeht, in das Gewinde der Gewindehülse (1) gedrückt werden.

12. Vorrichtung nach den Ansprüchen 8 oder 9, **dadurch gekennzeichnet, dass** dem verjüngten Körperwandbereich des Spannkonus (8) eine erste treppenartige Abstufung ausgespart ist, dermaßen, dass ein erster verjüngter Wandbereich geringeren Außendurchmessers dieser Abstufung folgend nachgeordnet angeordnet ist, und dem Innenwand-Trägerbereich des Gewindefußträgers (15) eine zweite treppenartige Abstufung ausgespart ist, dermaßen, dass ein zweiter verjüngter Wandbereich größeren Innendurchmessers dieser Abstufung folgend angeordnet ist, die im bolzengeschraubten Zustand des Spannkonus (8) rohraxial der ersten Lochachse (12) angeordnet und aufeinander liegend angeordnet sind.

13. Vorrichtung nach Anspruch 12, **dadurch gekennzeichnet, dass** der erste verjüngte Wandbereich mit einem zur Deckfläche des kegelstumpfförmigen Körpers des Spannkonus (8) abnehmenden ersten Konus versehen ist und der zweite verjüngte Wandbereich mit einem zum nicht plattenbefestigten Trägerende des Gewindefußträgers (15) abnehmenden zweiten Konus versehen ist, dermaßen, dass der erste und der zweite Konus dieser aufeinander liegenden verjüngten Wandbereiche zueinander kommunizierend angeordnet sind.

14. Verfahren zur mechanischen Verbindung von zwei Bauteilen, die jeweils mit einem durchgängig kreisrund gebohrten Loch bereitgestellt werden und dermaßen nebeneinander liegend angeordnet werden, dass die Lochachsen von beiden Löchern übereinstimmen werden, bei dem eine Vorrichtung nach Anspruch 1 eingesetzt wird, die aus mehreren Zusatzelementen besteht, mit denen die Befestigung der beiden Bauteile in drei Ebenen und deren formschlüssige Verbindung umgesetzt wird, mit den folgenden Schritten, nach denen
a) zunächst ein auf einem Außenwandbereich aufgebrachtes Außengewinde eines lochaxial einer Lochachse (12, 13) gelegenen und als hohlzylindrischer Körper ausgebildeten Gewindefußträgers (15) eines einem zweiten Bauteil (4) integrierten Gewindefußes (5) mit einem auf einem Innenwandbereich aufgebrachten Innengewinde eines lochaxial einer ersten Lochachse (12) gelegenen Gewindehülse (1) eines ersten Bauteils (3) durch eine Drehbewegung des Gewindefußträgers (15) um die erste Lochachse (12) geschraubt wird, wodurch eine Einstellung der beiden Bauteile (3, 4) in einer ersten Ebene umgesetzt wird,
b) weiter innerhalb einer Hülsenwand einer lochaxial gelegenen Spannhülse (2) von einem zweiten Bauteil (4) ein lochaxial gelegener und als weiterer hohlzylindrischer Körper ausgebildeter Außen-Excenter (6) und danach innerhalb letzterem ein als zusätzlicher hohlzylindrischer Körper ausgebildeter Innen-Excenter (7) lochaxial angeordnet wird,
c) darauffolgend die beiden Excenter mit entsprechender Drehrichtung um die Lochachsen (13, 14) der beiden Löcher bewegt werden, wodurch die Einstellungen der beiden Bauteile (3, 4) in den Querrichtungen für eine zweite und eine dritte Ebene umgesetzt werden,
d) anschließend ein lochaxial der ersten und zweiten Lochachse (12, 13) gelegener Gewindebolzen (9) durch einen verbleibenden Lochraum des dem ersten und dem zweiten Bauteil (3, 4) jeweils ausgenommenen Loches, welchen die Gewindehülse (1), der Gewindefuß (5) und einschließlich der Gewindefußträger sowie der Innen-Excenter (7) einschließen, geführt wird,
e) darauffolgend ein innerhalb der Gewindehülse (1) gelegener Bolzenendbereich des Gewindebolzens (9) durch entsprechende Bolzendrehungen um die erste Lochachse (12) einem lochaxial gelegenen Innengewinde eines Spannkonus (8), das auf der innenliegenden Wand einer durchgängigen Mittelbohrung des Spankonus (8) liegt, eingeschraubt wird,
f) weiter ein Bolzenkopf, der sich am anderen Ende des Gewindebolzens (9) befindet, am Innen-Excenter (7) anliegend positioniert wird,
g) danach durch eine lochaxiale Drehbewegung des Bolzenkopfes des Gewindebolzens (9) um die zweite Lochachse (13), die gleichfalls auf den Bolzenendbereich des Gewindebolzens (9) übertragen wird, der Spannkonus (8) dem Bolzenendbereich aufgeschraubt wird und gleichfalls auf den Gewindebolzen (9) mit einem vordefinierten Drehmoment eine bolzenaxial wirkende Zugkraft übertragen wird, wodurch der Spannkonus (8) gegen den Gewindefußträger (15) gedrückt wird, infolge dessen die beiden Bauteile (3, 4) durch alle eingesetzten Zusatzelemente mechanisch verbunden werden.

15. Verfahren nach Anspruch 14, **dadurch gekennzeichnet, dass** die Einstellung der zu positionierenden Bauteile (3, 4) in der ersten Ebene mit mehreren um die Rohrachse (12, 13) rohraxial verteilten Spreizfingern eines dermaßen ausgestatteten Gewindefußträgers (15) geschehen wird.

16. Verfahren nach Anspruch 15, **dadurch gekennzeichnet, dass** die Spreizfinger eine radiale Spreizwirkung ausüben werden, die gemäß dem Schritt g) durch einen rohraxial gerichteten mechanischen Druck des Spannkonus (8) gegen den Gewindefußträger (15) entfaltet wird, und nach geschehener Fingerspreizung in das Innengewinde der Gewindehülse (1) gedrückt werden.

17. Verfahren nach Anspruch 14, **dadurch gekennzeichnet, dass** die Arretierung der eingestellten Bauteilpositionen über die bolzenaxial übertragende Zugkraft nach dem Schritt g) realisiert wird und dabei die mechanische Verbindung der Bauteile (3, 4) gleichermaßen formschlüssig und spielfrei durch den axial wirkenden Spannkonus ausgelegt wird.

## Claims

1. Device for mechanically joining two components, through each of which a continuous circular hole is bored and which are disposed adjacent to one another so that the position of a first hole axis (12) of a first hole bored through a first component (3) and the position of a second hole axis (13) of a second hole bored through a second component (4) are aligned, for which several additional elements are used, by means of which the two components (3, 4) are secured in three planes and positively joined, comprising the following features, namely that a threaded sleeve (1) is a constituent part of a first component (3) and a clamping sleeve (2) is a constituent part of a second component (4), whereby these two sleeves (1, 2) are disposed with their holes oriented axially, and the second component (4) is fitted with a threaded foot (5) in which a threaded foot support (15) in the form of a hollow cylindrical body and a threaded foot plate (16) integrally formed on the latter, in a flange-type arrangement are integrated, whereby the threaded foot support (15) is joined at a right angle to the threaded foot plate (16), which is fixed on the clamping sleeve (2) transversely to the hole axes (13, 14), and a thread is provided on an internal wall region of the threaded sleeve (1) and on an external wall region of the threaded foot support (15), as a result of which an external thread provided on the external wall of the threaded support (15) can be screwed into an internal thread provided on the internal sleeve wall of the threaded sleeve (1) by rotating the threaded foot support (15) with the holes oriented axially about the first hole axis (12), causing an adjustment to be made to the two components (3, 4) in a first plane, and an outer eccentric contrivance (6) and an inner eccentric contrivance (7) is disposed inside the clamping sleeve (2), both of which are mounted with their holes oriented coaxially with the second hole axis (13), the inner eccentric contrivance (7) being disposed inside the outer eccentric contrivance (6), as a result of which the adjustments can be made to the two components (3, 4) in the transverse directions for the second and third plane by rotating the two eccentric contrivances (6, 7), with the holes oriented axially, about the second hole axis (14), and a threaded bolt (9) is inserted, with the holes oriented coaxially with the first and second hole axis (12, 13), through the remaining hole space of the first and second hole, which is bounded by the disposition of the threaded sleeve (1), by the threaded foot (5) and including the threaded foot support as well as the inner eccentric contrivance (7), the bolt thread of which, with a bolt end region placed inside the threaded sleeve (1), provided on the bolt periphery, enables an internal thread of a clamping cone (8), positioned with the hole oriented coaxially with the first hole axis (12) and provided in the form of a frustoconical body mounted on the internally lying wall of a continuous central bore directed towards the truncated cone-top surface, to be screwed by turning the bolt accordingly about the first hole axis (12), whereby a bolt head is formed on the other end of the threaded bolt (9) which lies with its end face transversely to the side of the inner eccentric contrivance (7), and once the adjustments have been made to the two components (3, 4), the clamping cone (8) is also screwed onto the bolt end region by a rotating movement of the bolt head coaxial with the hole about the second hole axis (13) and a tension force with a predefined torque acting axially on the bolt is simultaneously transmitted to the threaded bolt (9), as a result of which the clamping cone (8) is pushed against the threaded foot support (15) causing the components (3, 4) to be mechanically joined by all the inserted additional elements.

2. Device as claimed in claim 1, **characterised in that** the threaded foot plate (16), which is provided with a centre bore, is fitted in a flange-type arrangement to the end of the threaded foot support (15), the cylinder axis of which is disposed in alignment with the hole axis, and its flange side face is directed towards the second component (4).

3. Device as claimed in claim 2, **characterised in that** the bore diameter of the centre bore is smaller than or identical to the internal diameter of the threaded foot support (15) whereby the diameter of the centre bore is likewise bigger than the bolt diameter of the threaded bolt (9).

4. Device as claimed in claim 1, **characterised in that** at least a part region of the end face of the threaded foot plate (16) is fixed on the clamping sleeve (2).

5. Device as claimed in claim 1, **characterised in that** the outer eccentric contrivance (6) is provided in the form of another hollow cylindrical body with its hole positioned axially, the cylinder axis of which is disposed in alignment with the hole axis, on the end face of which a flange with another centre bore is fitted with its flange end face facing away from the first component (3), the bore diameter of which is identical to the internal diameter of the hollow cylindrical body, whereby the diameter of the centre bore is aligned with the internal diameter of the hollow cylindrical body, the rear face flange-end face of which is disposed lying against a step-shaped recess cut out from the internal circumferential wall region of the clamping sleeve (2).

6. Device as claimed in claims 1 and 5, **characterised in that** the inner eccentric contrivance (7) is provided in the form of an additional hollow cylindrical body positioned with its hole oriented axially, the cylinder axis of which is disposed in alignment with the hole axis, to the end face of which is fitted another flange with an additional centre bore, the flange end face of which faces away from the first component (3), whereby the diameter of the other centre bore is aligned with the internal diameter of the other hollow cylindrical body with its rear face flange-end face lying against the flange end-face of the outer eccentric contrivance (6).

7. Device as claimed in claims 1 and 6, **characterised in that** a retaining washer is placed underneath the threaded bolt (9), disposed between the bolt head and the flange end-face of the inner eccentric contrivance (7).

8. Device as claimed in claim 1, **characterised in that** the frustoconical hollow body of the clamping cone (8) is provided with a taper in the body wall extending on the external circumference towards the threaded foot support (15).

9. Device as claimed in claims 1 and 8, **characterised in that** the bore axis of the centre bore of the frustoconical hollow body of the clamping cone (8) is disposed in alignment with the first hole axis (12) and certain regions of the tapered body wall region on the external circumferential of the clamping cone (8) are inserted inside the threaded sleeve (1), preferably predominantly to partially.

10. Device as claimed in claims 1 and 9, **characterised in that** the internally lying wall of the centre bore of the clamping cone (8) is provided with an internal thread which can be screwed to the remaining (headless) second end of the threaded bolt (9) which is provided with an external thread, whereby the external wall of the clamping cone (8) is blocked against the internal wall support region of the threaded foot support (15) at the foot front side by a predefined tightening torque in the state with the bolt screwed in.

11. Device as claimed in claim 1, **characterised in that** the threaded foot (5) is provided with several expanding fingers which are pushed into the thread of the threaded sleeve (1) due to a radially exerted expanding action of the clamping cone (8) which is expended towards the threaded foot support (15) during the pushing-on operation.

12. Device as claimed in claims 8 or 9, **characterised in that** a first step-shaped land is cut out from the tapered body wall region of the clamping cone (8) so that a first tapered wall region with a small external diameter is disposed downstream after this land, and a second step-shaped land is cut out from the internal wall support region of the threaded foot support (15) so that a second tapered wall region with a bigger internal diameter is arranged downstream after this land, which are disposed with the tube coaxial with the first hole axis (12) and lying one on the other when the clamping cone (8) is in the state with the bolt screwed in.

13. Device as claimed in claim 12, **characterised in that** the first tapered wall region is provided with a first cone decreasing towards the top surface of the frustoconical body of the clamping cone (8) and the second tapered wall region is provided with a second cone decreasing towards the support end of the threaded foot support (15) not secured to the plate, so that the first and the second cone of these tapered wall regions lying one on the other are disposed so that they communicate with one another.

14. Method of mechanically joining two components, through each of which a continuous circular hole is bored and which are disposed adjacent to one another so that the hole axes of the two holes are aligned with one another, whereby a device as claimed in claim 1 is used, which comprises several additional elements by means of which the two components are secured in three planes and positively joined, comprising the following steps, namely
a) an external thread provided on an external wall region of a threaded foot support (15) of a threaded foot (5) integrated in a second component (4) and provided in the form of a hollow cylindrical body positioned with its hole coaxial with a hole axis (12, 13) is firstly screwed to an internal thread provided on an internal wall region of a threaded sleeve (1) of a first component (3) positioned with its hole coaxial with the hole of a first hole axis (12) by a rotating movement of the threaded foot support (15) about the first hole axis (12), as a result of which the two components (3, 4) can be adjusted in a first plane,
b) then, placed inside a sleeve wall of a clamping sleeve (2) of a second component (4) positioned with its hole axially oriented is an outer eccentric contrivance (6) in the form of another hollow cylindrical body which is positioned with its hole oriented axially, and then placed in it, with its hole oriented axially, is an inner eccentric contrivance (7) provided in the form of an additional hollow cylindrical body,
c) the two eccentric contrivances are then moved in the appropriate direction of rotation about the hole axes (13, 14) of the two holes, causing the adjustments to be made to the two components (3, 4) in the transverse directions for a second and a third plane,
d) then a threaded bolt (9) positioned with its hole coaxial with the first and second hole axis (12, 13) is inserted through a remaining hole space of the hole bored in the first and second component (3, 4) enclosed by the threaded sleeve (1), the threaded foot (5) and including the threaded foot support and the inner eccentric contrivance (7),
e) after which a bolt end region of the threaded bolt (9) positioned inside the threaded sleeve (1) is screwed into an internal thread of a clamping cone (8), positioned with its hole oriented axially, disposed on the internally lying wall of a continuous centre bore of the clamping cone (8) by turning the bolt accordingly about the first hole axis (12),
f) then a bolt head disposed at the other end of the threaded bolt (9) is positioned lying against the inner eccentric contrivance (7),
g) after which, with the holes positioned axially, by effecting a rotating movement of the bolt head of the threaded bolt (9) about the second hole axis (13), which is also transmitted to the bolt end region of the threaded bolt (9), the clamping cone (8) is screwed onto the bolt end region and a tension force acting along the bolt axis is likewise transmitted to the threaded bolt (9) with a predefined torque, causing the clamping cone (8) to be pushed against the threaded foot support (15), as a result of which the two components (3, 4) are mechanically joined to one another by all the additional elements used.

15. Method as claimed in claim 14, **characterised in that** the adjustment of the components (3, 4) to be positioned in the first plane takes place by means of several expanding fingers distributed about the tube axis (12, 13) coaxially with the tube of a threaded foot support (15) fitted therewith.

16. Method as claimed in claim 15, **characterised in that** the expanding fingers exert a radial expanding action which is released during step g) due to a mechanical pressure of the clamping cone (8) directed coaxially with the tube axis towards the threaded foot support (15), and after expanding, the fingers are pushed into the internal thread of the threaded sleeve (1).

17. Method as claimed in claim 14, **characterised in that** the adjusted position of the components is blocked by means of the tension force transmitted across the bolt axis after step g), thereby resulting in the mechanical connection of the components (3, 4) which is both positive and clearance-free due to the axially acting clamping cone.

## Revendications

1. Dispositif pour relier mécaniquement deux composants traversés chacun par un alésage à section circulaire et disposés côte à côte de manière que la position d'un premier axe d'alésage (12) correspondant à l'alésage percé dans le premier élément (3) et la position du second axe d'alésage (13) correspondant à l'alésage percé dans le second élément (4) sont en coïncidence, dans lequel sont utilisés plusieurs éléments auxiliaires pour assurer la fixation des deux composants (3 et 4) dans trois plans ainsi que leur liaison avec verrouillage par combinaison de formes, ce dispositif présentant les caractéristiques suivantes :
- une douille filetée (1) qui est un élément du premier composant (3) et une douille de serrage (2) qui est un élément du second composant (4) sont disposées axialement par rapport aux alésages, ce second composant (4) comportant un pied fileté (5) qui intègre sous la forme d'un corps cylindrique creux un support de pied fileté (15) et une plaque de pied fileté (16) qui est une bride formée sur ce support,
- le support de pied fileté (15) est relié à angle droit à la plaque de pied fileté (16) qui est fixée à la douille de serrage (2) perpendiculairement aux axes d'alésage (13, 14), et une zone de la paroi interne de la douille filetée (1) ainsi qu'une zone de la paroi externe du support du pied fileté (15) présentent chacune un filetage, de sorte que le filetage externe situé sur la paroi externe du support de pied fileté (15), quand ce support tourne autour du premier axe d'alésage (12) se visse sur le filetage interne situé sur la paroi interne de la douille filetée (1) en réalisant ainsi un réglage des deux composants (3, 4) dans un premier plan,
- à l'intérieur de la douille de serrage (2) se trouvent un excentrique externe (6) et un excentrique interne (7) coaxiaux au second axe d'alésage (13), l'excentrique interne (7) étant monté à l'intérieur de l'excentrique externe (6), de sorte qu'une rotation axiale des deux excentriques (6, 7) autour du second axe d'alésage (14) permet de réaliser les réglages des deux composants (3, 4) dans les directions transversales correspond au deuxième et au troisième plan,
- un boulon (9) coaxial aux deux axes d'alésage (12, 13) traverse l'espace subsistant dans le premier et dans le second alésage, qui est délimité par l'ensemble de la douille filetée (1), du pied fileté (5), du support de pied fileté et de l'excentrique interne (7),
- le filetage du boulon (9) qui comporte une zone à l'intérieur de la douille filetée (1), est un filetage périphérique qui peut, par rotation de la tige autour du premier axe d'alésage (12), se visser sur un filetage interne d'un cône de serrage coaxial à cet axe et constitué par un corps creux en forme de tronc de cône, ce filetage étant réalisé, sur la paroi interne d'un alésage médian traversant et dirigé vers la petite base du tronc de cône,
- à son autre extrémité, le boulon (9) possède une tête qui, transversalement à la direction de l'alésage, est appliquée frontalement sur l'excentrique interne (7) et une fois effectués les réglages des deux composants (3, 4), une rotation autour du second axe d'alésage (13), fait se visser sur la zone d'extrémité du boulon le cône de serrage (8), avec en même temps transmission au boulon (9) par un couple prédéfini, d'une force de traction axiale, de sorte que le cône de serrage (8) est poussé contre le support de pied fileté (15), à la suite de quoi les composants (3, 4) sont reliés mécaniquement par l'intermédiaire de tous les éléments auxiliaires utilisés.

2. Dispositif selon la revendication 1, **caractérisé en ce qu'**à l'extrémité du support de pied fileté, dont le cylindre a pour axe l'axe de l'alésage, est montée en bride la plaque de pied fileté (16), qui comporte un alésage médian et dont la face frontale de bride et en regard du second composant (4).

3. Dispositif selon la revendication 2, **caractérisé en ce que** le diamètre de l'alésage médian est au moins égal au diamètre du boulon (9).

4. Dispositif selon la revendication 1, **caractérisé en ce qu'**au moins une partie de la face frontale de la plaque de pied fileté (16) est fixée à la douille de serrage (2).

5. Dispositif selon la revendication 1, **caractérisé en ce que** l'excentrique externe (6) est un autre corps cylindrique creux, dont l'axe est identique à l'axe d'alésage et à l'extrémité duquel est montée une bride présentant un autre alésage médian, la face frontale de bride étant éloignée du premier composant (3) et la bride présentant un diamètre égal au diamètre interne du corps cylindrique creux, tandis que le diamètre de l'alésage médian correspond au diamètre interne du corps cylindrique creux dont la face frontale de bride arrière est appliquée sur un évidement creusé dans la zone périphérique interne de la paroi de la douille de serrage (2) avec formation d'un gradin.

6. Dispositif selon les revendications 1 et 5, **caractérisé en ce que** l'excentrique interne (7) est un corps cylindrique supplémentaire creux, dont l'axe de cylindre est identique à l'axe d'alésage et à l'extrémité duquel est montée une autre bride présentant un alésage médian supplémentaire, la face frontale de bride étant éloignée du premier composant (3), le diamètre de l'autre alésage médian correspondant au diamètre interne de l'autre corps cylindrique creux dont la face frontale de bride arrière est appliquée sur la face frontale de bride de l'excentrique externe (6).

7. Dispositif selon une des revendications 1 à 6, **caractérisé en ce qu'**autour du boulon (9) est placée une rondelle de sécurité, entre la tête du boulon et la face frontale de la bride de l'excentrique interne (7).

8. Dispositif selon la revendication 1, **caractérisé en ce que** le corps creux, en forme de tronc de cône, du cône de serrage (8) a à sa surface externe qui va en se rétrécissant en direction du support de pied fileté (15).

9. Dispositif selon les revendications 1 et 8, **caractérisé en ce que** l'axe de l'alésage médian du corps creux, en forme de tronc de cône, constituant le cône de serrage (8) est identique au premier axe d'alésage (12) et la zone de la paroi externe du cône de serrage (8) qui va en se rétrécissant, est guidée de préférence totalement ou en partie à l'intérieur de la douille filetée (1).

10. Dispositif selon les revendications 1 et 9, **caractérisé en ce que** la paroi interne de l'alésage médian du cône de serrage (8) porte un filetage interne qui peut être vissé sur la seconde extrémité (sans tête) du boulon (9) qui porte un filetage externe, la paroi externe du cône de serrage, lorsque le boulon est vissé, étant bloquée sur la zone porteuse de la paroi interne du support de pied fileté (15) située en avant du pied, avec un couple de traction prédéfini.

11. Dispositif selon la revendication 1, **caractérisé en ce que** le pied fileté (5) comporte plusieurs doigts expansibles qui, par un effet d'expansion radiale exercé par le cône de serrage (8) lorsqu'il est en pression sur le support de pied fileté (15), sont appliqués sur le filetage de la douille filetée (1).

12. Dispositif selon la revendication 8 ou 9, **caractérisé** eh ce que dans la zone de la paroi, qui va s'amincissant, du cône de serrage (8), est arélisé un premier évidement formant gradin, de sorte qu'une première zone de paroi amincie à diamètre externe plus faible fait suite à cet évidement, et dans la zone de paroi interne du support de pied fileté (15) est produit un second évidement formant gradin, de sorte qu'une seconde zone de paroi amincie à diamètre interne plus grand fait suite à cet évidement, et ces évidements, quand le cône de serrage (8) est vissé sur la tige, sont coaxiaux au premier axe d'alésage (12) et appliqués l'un sur l'autre.

13. Dispositif selon la revendication 12, **caractérisé en ce que** la première zone de paroi amincie présente un premier cône qui va en diminuant en direction de la petite base du corps en forme de tronc de cône constituant le cône de serrage (8) et la seconde zone de paroi amincie présente un second cône qui va en diminuant en direction de l'extrémité du support de pied fileté (15) qui n'est pas fixée à la plaque, de manière que le premier et le second cône de ces zones de paroi amincies situées l'une sur l'autre sont communicants entre eux.

14. Procédé pour relier mécaniquement deux composants qui sont traversés chacun par un alésage à section circulaire et sont disposés côte à côte de manière que les axes des deux alésages coïncident, avec utilisation d'un dispositif selon la revendication 1 composé de plusieurs éléments auxiliaires par lesquels est assurée la fixation des deux composants dans trois plans ainsi que leur liaison avec verrouillage par combinaison de formes, procédé qui comporte les étapes suivantes :
a) tout d'abord un filetage externe réalisé sur une zone de paroi externe d'un support de pied fileté (15) coaxialement à un axe d'alésage (12, 13) et constitué par un corps cylindrique faisant partie d'un pied fileté (5) intégré à un second composant (4), est vissé sur un filetage externe réalisé sur une zone de paroi interne d'une douille filetée coaxiale à l'axe d'alésage (12) et faisant partie d'un second composant (3), par rotation du support de pied fileté (15) autour du premier axe d'alésage (12), en réalisant ainsi un réglage des deux composants (3, 4) dans un premier plan,
b) ensuite, à l'intérieur d'une paroi d'une douille de serrage (2) coaxiale appartenant au second composant (4) est placé un excentrique externe coaxial à l'axe d'alésage et constitué par un autre corps cylindrique creux, puis à l'intérieur de ce corps est placé coaxialement un excentrique interne (7) constitué par un corps cylindrique creux supplémentaire,
c) ensuite, les deux excentriques sont déplacés par rotation autour des deux axes d'alésage (12, 13) correspondants, en réalisant ainsi les réglages des deux composants (3, 4) dans les directions transversales correspondant à un deuxième et à un troisième plan,
d) ensuite, un boulon fileté (9) monté coaxialement au premier et au deuxième axe d'alésage (12, 13), est introduit à travers l'espace subsistant dans les alésages du premier et du second composant (3, 4) qui est entouré par la douille filetée (1), le pied fileté (5) y compris le support de pied fileté et l'excentrique interne (7),
e) ensuite, une zone située à l'intérieur de la douille filetée (1) et faisant partie du boulon fileté (9), par rotation de celui-ci autour du premier axe d'alésage (12) est vissé sur un filetage interne coaxial d'un cône de serrage (8), réalisé sur la paroi interne d'un alésage médian traversant le cône de serrage (8),
f) ensuite, la tête, qui se trouve à l'autre extrémité du boulon (9), est positionnée en appui sur l'excentrique interne (7),
g) ensuite, une rotation de la tête du boulon (9) autour du second axe d'alésage (13), qui est également transmise à l'extrémité de la tige du boulon (9) fait se visser le cône de serrage (8) sur cette extrémité et en même temps au boulon (9) est transmise, avec un couple prédéfini, une force de traction agissant axialement, de sorte que le cône de serrage (8) est mis en pression sur le support de pied fileté (15) avec pour conséquence que les deux composants (3, 4) sont reliés mécaniquement par tous les éléments auxiliaires utilisés.

15. Procédé selon la revendication 14, **caractérisé en ce que** le réglage des composants (3, 4) à positionner dans le premier plan est assuré au moyen de plusieurs bras d'expansion répartis autour de l'axe de tube (12, 13) d'un support de pied fileté (15) tubulaire.

16. Procédé selon la revendication 15, **caractérisé en ce que** les doigts d'expansion vont exercer une action d'expansion radiale qui, à l'étape g) se manifeste par une pression mécanique dirigée axialement du cône de serrage (8) sur le support de pied fileté (15) et ces doigts, après expansion, sont en pression sur le filetage interne de la douille filetée (1).

17. Procédé selon la revendication 14, **caractérisé en ce que** le blocage des positions réglées des composants est réalisé par la force de traction transmise axialement par le boulon après l'étape g), et ainsi la liaison mécanique des composants (3, 4) est réalisée avec verrouillage par combinaison de formes et sans jeu, par le cône de serrage agissant axialement.
